# EUROPEAN PATENT APPLICATION

(11) **EP 3 001 643 A1**
(43) Date of publication of application: **30.03.2016**
(21) Application number: 14290293.1
(22) Date of filing: 29.09.2014
(51) Int. Cl.: H04L 29/08, G06F 9/50, H04L 12/24

(54) **Methods and devices used when transmitting data packets of a data packet flow in a data center network**

(71) Applicant: Alcatel Lucent, 92100 Boulogne-Billancourt (FR)
(72) Inventor: Ivica, Rimac, 70435 Stuttgart (DE); Binoy, Chemmagate, 00320 Helsinki (FI)
(74) Representative: Louis Pöhlau Lohrentz

(57) **Abstract**

The present invention relates to the transmittal of data packets of a data packet flow in a data center network 100 by means of an external control by a control unit 14, which collects, by means of Link Layer Discovery (LLDP) protocol messages, monitoring data informing about the utilisation and status 16a of paths and links therein and CPU consumption and memory consumption 16b relating to virtual machine instances 12 of a service. Based on that information, the control unit 14 determines indicators 20, corresponding to weights or priorities, which are then sent back to the data center network 100, for the switching units 10 being able to determine a respective number of data packets which are to be transmitted along a specific path, wherein these numbers differ for at least two paths. Paths having a high load or paths having specific links of which the load is rather high, or paths wherein computer processing units or memory are extensively used, can be caused to transmit less data packets than in the prior art.

## Description

### Field of the invention:

The invention relates to Cloud-based services (such as, e. g. virtualized load-balancer appliances), and generally relates to the transmission of data packets of a data packet flow in a data center network, in particular under software control.

### Background of the invention:

In Cloud-based services, a physical network (e.g., a data center network) is used for transmission of a data packet flow having a plurality of data packets wherein the transmission is controlled at least in part by software. The software can partly run within switching devices in the physical network itself, but might in other parts also be controlled from control devices different from the switching devices.

The concept of (in particular dynamically) finding a "best path" for a specific data packet flow has since some time been largely replaced by other conceptions.

For instance, in SDN ("Software-Defined Networks"), specific switching devices ("switches") which are enabled for SDN are provided in the physical network. These switches may use flow tables for distributing packet flows across multiple nodes. Flow tables allows the dynamic partition of the flows to meet arbitrary partitioning and mapping of flows onto the many so-called instances defined by the software. The use of flow tables requires per-flow entries in the memory of the switching device and is thus not efficient.

A second modern concept is "Equal Cost MultiPath" (ECMP). In ECMP, when determining where to send particular data packets, the principal relies on the assumption that all paths are regarded as having "equal costs". "Equal costs" means that the available data rate (absolute value) or the load (data rate per maximum data rate) is assumed to be the same for all paths. ECMP is implemented within the switching devices.

Both the use of SDN-enabled switching devices and the use of ECMP provided by software in the switching devices are static implementations that do not take under account current condition changes in the network.

In other words, if there are repeatedly changing conditions in the data center network (i. e., "dynamics" in the data center network), SDN or ECMP may be insufficient or inefficient due to the dynamics in the data center. The networks may be used inefficiently due to: for instance, some of the links in the paths could have too high a load, without the conception providing a remedy. When transmitting the data packet flow, these and similar affects lead further to higher costs from the financial point of view.

### Summary of the invention:

Some simplifications may be made in the following summary, which is intended to highlight and introduce some aspects of the various exemplary embodiments, but such simplifications are not intended to limit the scope of the inventions. Detailed descriptions of a preferred exemplary embodiment adequate to allow those of ordinary skill in the art to make and use the inventive concepts will follow in later sections.

Various embodiments provide a method and apparatus for a solution of flexibly transmitting data paths to react to a respective current situation in the data center network, e. g. to react when there is a link having to high a load, or to react when there is a computer unit or the virtual machine running thereon having a defect.

Still further embodiments provide for devices for use in a method of transmitting data packets provided, and to methods performed by these individual devices.

At least one of the objects is solved by a method of transmitting data packets of a data packet flow in a data center network, wherein in the data center network, from a source where the data packet flow is first available, to a destination where the data packet flow is to be transmitted, a plurality of paths is able to be used for transmitting of at least one data packet of the data packet flow, wherein there is a plurality of switching devices in the data center network provided, each switching device for one or more of the paths, wherein the switching device is able to cause a data packet to be transmitted through the respective path or paths, wherein monitoring data providing at least one kind of information regarding each path is obtained and a control unit external to the data center network is provided with the monitoring data for more than one of the paths, and wherein the control unit attributes to each of these more than one of the paths an indicator, wherein the indicator differs for at least two of the paths, and further wherein the control unit sends the indicators to the respective switching device and wherein each switching device causes a number of data packets to be transmitted through the respective paths, wherein the number is selected from any numerical number including zero, and is with respect to each path dependent on the indicator (and thus different with regard to at least two of the paths).

In a second embodiment, at least one of the objects is solved by a method of controlling the distribution of data packets of a data packet flow in the data center network by an external control unit, wherein the data network includes a plurality of paths for transmitting data packets and a plurality of switching devices for controlling the transmission of data packets received along one or more respective paths, wherein the control unit
a) receives from the data center network monitoring data which provide information regarding at least two paths,
b) determines indicators for each path according to a predetermined criterion in dependence of the monitoring data, wherein at least two indicators are different from each other and
c) sends each indicator to the respective switching device pertaining to the path for which the indicator is determined.

In a third embodiment, at least one of the objects is solved by a control unit for controlling the distribution of data packets of a data packet flow in a data center network, the data center network including a plurality of paths for transmitting data packets and a plurality of switching devices for controlling the transmission of data packets received along one or more respective paths, wherein the control unit is configured to
a) receive from the data center monitoring data which provide information regarding at least two paths, to
b) determine indicators for each path according to a predetermined criterion in dependence of the monitoring data and to
c) send each indicator to the respective switching device pertaining to the path for which the indicator is determined.

In a fourth embodiment, at least one of the objects is solved by a method of controlling the transmission of data packets in a data center network by a switching device along a path to which the switching unit pertains, wherein the switching device
a) receives from a control unit external to the data center network an indicator,
b) receives a plurality of data packets,
c) determines in dependence of the indicator which number of data packets of the plurality of data packets to transmit via the path, and
d) causes transmission of the number of data packets determined via the path.

In a fifth embodiment, at least one of the objects is solved by a switching device for use in a data center network for controlling the transmission of data packets along one or more respective paths,

wherein the switching device is configured to
a) receive from a control unit external to the data center network an indicator, to
b) receive a plurality of data packets, to
c) determine in dependence of said indicator which number of data packets of the plurality of data packets to transmit via which path, to
d) cause transmission of the number of data packets determined via respective one or more paths.

In a sixth embodiment, at least one of the objects is solved by a data center network having a plurality of paths for transmitting data packets, with each path having one or more links, wherein further the data center network has a plurality of switches according to the fifth aspect of the present invention described hereabove.

In a seventh embodiment, the problem is solved by a method of controlling the transmission of data packets in a data center network by a plurality of switching devices to which each at least one path for transmission of data packets in said data center network pertains, wherein
a) an order to transmit data packet flow from a source in the data center network to a destination in the data center network is received, and wherein each switching device is provided with information about the total number of data packets or the total data rate in the data packet flow,
b) each switching device receives an indicator for each respective path, wherein two indicators differ from each other for at least one of the switching devices,
c) each switching device determines both in dependence of the indicator which it has received and in dependence of the total number or the total data rate which number of data packets of the plurality of data packets to transmit via which of the one or more paths pertaining thereto and
d) each switching unit causes transmission of the number of data packets it has determined.

These embodiments, have the advantage that those paths having a high load or paths having specific links of which the load is rather high, or paths wherein computer processing units or memory are extensively used, can be caused to transmit less data packets than in the prior art, wherein the transmittal of the data packets is in a larger part performed via paths wherein the load is less, or where less computer or memory capacity is needed.

In a preferred embodiment, the physical network, the data center network, is only in part used. Then, from the total number of possible paths in said data center network, the plurality of paths which are able to be used is selected and activated by using a computer algorithm. Such conception is known as Cloud computing. Commonly, such computer algorithm is placed within an external control unit, wherein the respective switching devices pertaining to the data center network, or at least those pertaining to the paths which are finally selected, are equally provided with a suitable computer algorithm contributing to the selection of these paths. Preferably, software according to the OpenStack conception (or format) is used both in the external control unit and in the respective switching devices. It might even be that the OpenStack software or generally, the computer algorithm, needs to be present in order for the switching devices to be selected, wherein in other switching devices, that software is not provided.

Some embodiments introduces the notion of using the monitoring data to determine the number of data packets transmitted via each a respective path of the one or more paths.

The monitoring data preferably include
a) data providing information about the current utilisation of each link in each path. Then, determining the indicator can account of the load in the individual portions (links) of the paths.
   Alternatively (or in addition), the monitoring data include
b) data providing information about the current utilisation of each path when seen as a whole. Then, one can discover "bottle necks" in the path and determine the indicator accordingly. Such "bottle neck" might be a link which allows only for a low data rate either due to its maximum data rate being limited, or due to overload.
   Alternatively (or in addition), the monitoring data can include
c) data providing information as to each link in each path about whether the link is available for transmission or not. Then, possible failures of links can be accounted for when controlling how the switching devices transmit the data packets.
   Moreover and finally, alternatively or in addition, the monitoring data can include
d) data providing information as to each data processing unit of at least a portion of the data processing units used in the data center. Such data processing units, commonly called "hosts", are specifically defined in Cloud computing (when of the total number of paths a plurality of paths is selected by using a computer algorithm). The information relates then preferably to the currently used amount of computer processing unit or the currently used amount of memory in these data processing units.

The monitoring data described above can be obtained, namely by the switching units themselves, in the form of Link Layer Discovery Protocol (LLDP) messages. There is thus no need to provide separately for the monitoring data if the LLDP or a similar protocol is already implemented.

In a preferred embodiment, the indicators for each path are determined according to a predetermined criterion, which predetermined criterion includes that weights or priorities are attributed to each path, which weights or priorities determine the number of data packets transmitted by the respective switching device via that path, and wherein these weights or priorities are determined such as to prefer paths currently having a lower absolute load or lower relative load with respect to a maximum load over paths currently having a higher absolute load or lower relative load with respect to a maximum load, which load of path is either seen as a whole or with regard to individual links of the path. Here, in accounting for the relative load, the case is also included that there is no "maximum load" at all due to failure of a corresponding link, blocking the entire path.

### Brief description of the figures:

The present invention will be more completely understood by the following detailed descriptions of embodiments of the present invention with reference to the figures, wherein
- fig. 1: shows the overall scheme of a system which as a whole or in parts is able to perform the several methods and provides the several devices according to the different aspects,
- fig. 2: explains the prior art conception of Equal Cost MultiPath spreading of data packets by a switching unit, and
- fig. 3: explains the inventive conception of non-Equal Cost MultiPath (or weighted Equal Cost MultiPath) spreading of data packets by a switching unit.

### Description of Preferred Embodiment:

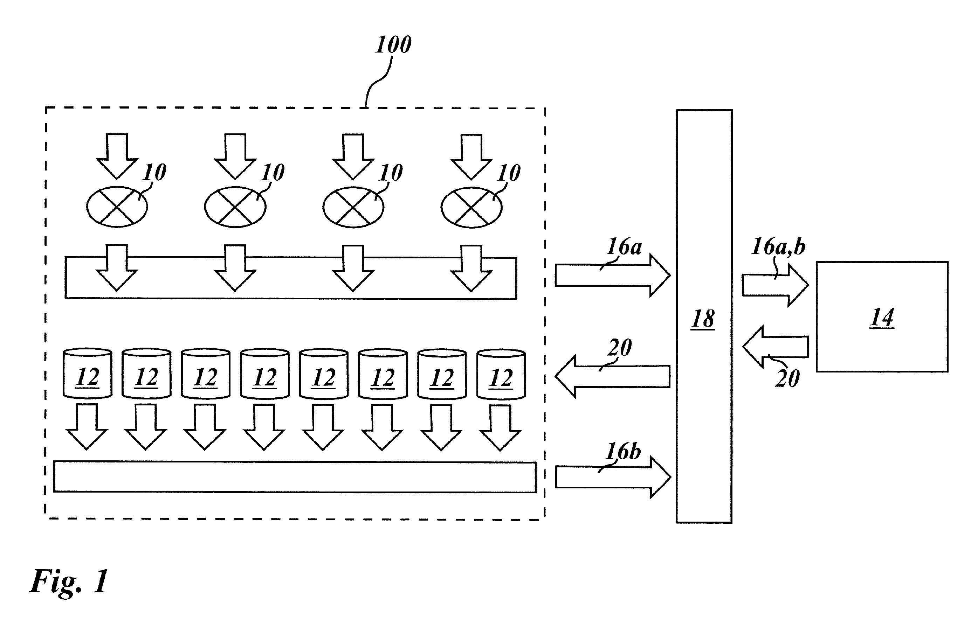

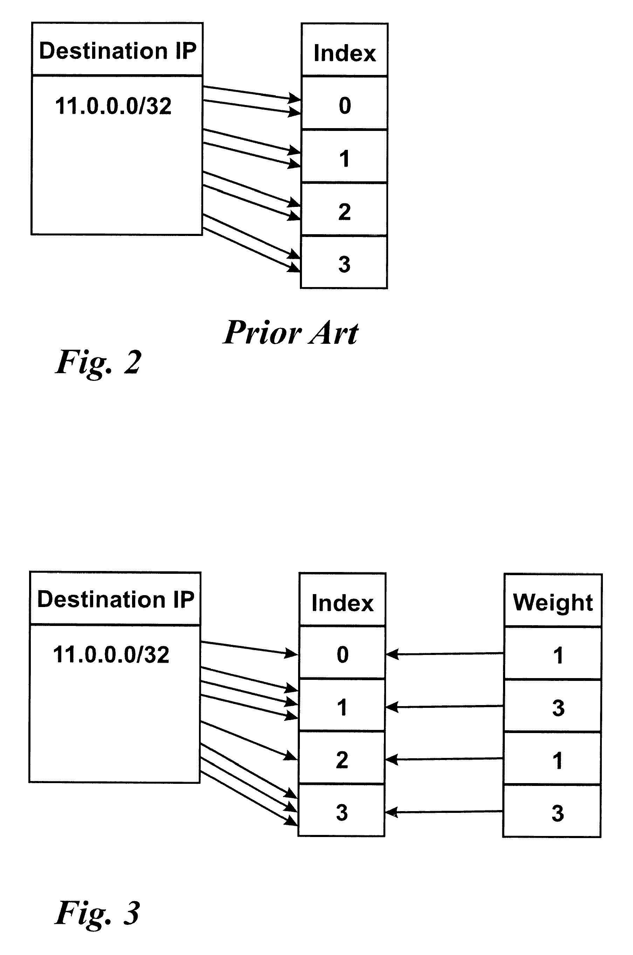

A physical network (data center network (100) as shown in fig. 1) is used for transmitting data packets of a data packet flow from a source (not specifically shown) to a destination. The embodiment is based on the use of multiple paths in that data center network by means of switching units (10), with each switching unit being attributed to at least one path numbered by an index (see fig. 2 and 3). In the conception of Cloud services as herein made use of, there are so-called instances (or hosts) (12), which are nothing else than software units running on a data processing unit and representing a virtual network which provides for a selection of individual entities in the data center network (100) for a specific purpose. The instances can, e. g., communicate with other software via Application Programming Interfaces (APIs). In the prior art, the portion with data center (100) as indicated by the broken line, is the only unit made use of. In the conception of Equal Cost MultiPath, as illustrated in fig. 2, upon arrival of data packet flow to which a destination IP is attributed (in the example "11.0.0./32") there is implicitly an order to transmit the data packet flow to the destination having the destination IP in the data network received, and the respective switching unit or units are provided with information about the total number of data packets or total data rate in the data packet flow. In the present example, we assume that here eight data packets or data packet groups of equal size are provided. A specific switch such as indicated at 10 in fig. 1 allows transmittal over four different paths having index 0, 1, 2 or 3, respectively. According to ECMP, of the eight data packets (data packet groups), two of these are accordingly transmitted via each of the paths indexed 0, 1, 2 and 3.

The present method of transmitting data packets now makes use of an external control unit (14) communicating via interface (18) with the data center network (100).

In a well-known manner, the switching units (10) or the hosts (12) are subject to monitoring, e. g., by the switching units (10) or the hosts (12) themselves. In an example, such monitoring provides monitoring data in the form of Link Layer Discovery Protocol (LLDP) messages. The first group of these messages is indicated at 16a, a second group of messages is indicated at 16b.

The first group of messages 16a provides information about the physical properties of the data center network entities, namely the paths therein and individual links in the individual paths.

For example, by using LLDP messages between the individual switching units (10), the following monitoring data can be determined:
- NL-util [i, j]: This is the utilisation of each link j in path i, in the unit of data rate or utilisation percentage of the maximum data rate.
- N-util [i]: This is the link utilisation for the path i, when seen as a whole. If, for instance, the utilisation percentage of the maximum data rate is in link 1 of path i 20%, in link 2 of path i 70%, in link 3 pf path i 80%, in link 4 of path i 10 %, then, it is the maximum value of utilisation percentage of all of the links which determines the utilisation percentage of the path i when seen as a whole; since there is only 20% available in the link 3 for any traffic towards the destination, N-util [i] would be 80%.
- NL-stat [i, j]: This is the status of each link j in path i, indicated as a binary value, 0 or 1, informing whether the link j in path i is available for transmission of data packets ("1"), or not ("0").

Indicated at 16b in fig. 1 are monitoring data relating to the virtual machine instances of a service and can, e. g., include:
- CPU [i]: This is the computer processing unit consumption of resource i.
- memory [i]: This is the memory consumption of resource i.

The information provided at 16b is specifically of interest when there are CPU-intensive tasks, or where there are memory-consuming tasks.

The monitoring data 16a, 16b is forwarded by interface 18 to the control unit 14 external to the data center network 100. In control unit 14, these monitoring data are received and the control unit 14 thus has an "overview" on the physical network (e.g., the switching units 10) and the corresponding paths, and on the virtual machine instances 12. The control unit 14 is thus able to detect along which paths by using which virtual machine the data packets can more easily be transmitted (or routed) and along which other paths by using which other virtual machines, they cannot as easily or not at all be transmitted.

Accordingly, in the example of fig. 3, the control unit 14 determines weights and submits corresponding indicators as indicated at 20 in fig. 1 via interface 18 to the data center network 100, specifically to the switching units 10 therein. The switching units 10 receive the indicators, in the example of fig. 3, the two different weights "1" and "3".

Relating to the same starting situation as in fig. 2, with the same destination and eight data packets/data packet groups, this time, those paths having a weight of "1" are used to transmit a single data packet only (in contrast to two data packets in the prior art conception of ECMP), with those paths being attributed a weight of "3" are used to transmit three packets/data packet groups.

Instead of weights, priorities could be used, basically leading to the same technical effect within the switches.

The data center network 100 as used in the prior art is thus complemented by control unit 14 and interface 18, leading to the ability of collecting monitoring data within the control unit 14 and returning corresponding indicators 20 to switching units 10, determining how many data packets are transmitted by the switching units 10 to each corresponding path.

## Claims

1. A method of transmitting data packets of a data packet flow in a data center network (100), wherein in the data center network (100), from a source where the data packet flow is first available, to a destination where the data packet flow is to be transmitted, a plurality of paths are able to be used for transmitting of at least one data packet of said data packet flow, wherein there is a plurality of switching devices (10) in the data center network (100) provided, each switching device (10) for one or more of said paths wherein the switching device is able to cause a data packet to be transmitted through the respective path or paths, **characterized in that** monitoring data (16a, 16b) providing at least one kind of information regarding each path is obtained and a control unit (14) external to said data center network (100) is provided with the monitoring data (16a, 16b) for more than one of said paths, and **in that** said control unit (14) attributes to each of these more than one of said paths an indicator (20), wherein said indicator (20) differs for at least two of said paths, and further **characterized in that** said control unit (14) sends the indicators (20) to the respective switching device (10) and **in that** each switching device (10) causes a number of data packets to be transmitted through the respective one or more paths, wherein said number is selected from any numerical number including zero, and is with respect to each path dependent on said indicator (20) and thus different for the at least two of said paths.

2. The method according to claim 1, wherein from the total number of possible paths in said data center network, said plurality of paths which are able to be used is selected and activated by using a computer algorithm, in particular for Cloud services, provided within the external control unit (14) and also within the respective switching device (10) pertaining to said selected paths, preferably by using OpenStack software.

3. The method according to claim 1 or 2, wherein each path comprises one or more links, and wherein said monitoring data include
a) data providing information about the current utilisation of each link in each path, and/or
b) data providing information about the current utilisation of each path when seen as a whole, and/or
c) data providing information as to each link in each path about whether said link is available for transmission or not, and/or
d) data providing information as to each data processing unit (12) of at least a portion of the data processing units used, preferably as hosts (12), in said data center network (100) on
d1) its currently used amount of computer processing unit and/or
d2) its currently used amount of memory.

4. The method according to anyone of the preceding claims, wherein said monitoring data are obtained in the form of Link Layer Discovery Protocol (LLDP) messages as provided by said switching units (10).

5. A method of controlling the distribution of data packets of a data packet flow in a data center network (100) by an external control unit (14), wherein said data network (100) includes a plurality of paths for transmitting data packets and a plurality of switching devices (10) for controlling the transmission of data packets received along one or more respective paths, **characterized in that** said control unit (14)
a) receives from the data center network (100) monitoring data (16a, 16b) which provide information regarding at least two paths,
b) determines indicators (20) for each path according to a predetermined criterion in dependence of said monitoring data, wherein at least two indicators (20) are different from each other and
c) sends each indicator (20) to the respective switching device (10) pertaining to the path for which said indicator (20) is determined.

6. The method of claim 5, wherein said predetermined criterion includes that weights or priorities are attributed to each path which determine the number of data packets transmitted by the respective switching unit via that path, and wherein the weights or priorities are determined such as to prefer paths currently having a lower absolute load or lower relative load with respect to a maximum load over paths currently having a higher absolute load or lower relative load with respect to a maximum load, which load of path is either seen as a whole or with regard to individual links of the path.

7. A control unit (14) for controlling the distribution of data packets of a data packet flow in a data center network (100), said data center network (100) including a plurality of paths for transmitting data packets and a plurality of switching devices (10) for controlling the transmission of data packets received along one or more respective paths,
**characterized in that** said control unit is configured to
a) receive from the data center (100) monitoring data (16a, 16b) which provide information regarding at least two paths, to
b) determine indicators (20) for each path according to a predetermined criterion in dependence of said monitoring data and to
c) send each indicator (20) to the respective switching device (10) pertaining to the path for which said indicator is determined.

8. A method of controlling the transmission of data packets in a data center network (100) by a switching device (10) along a path to which said switching device (10) pertains,
**characterized in that** said switching unit
a) receives from a control unit (14) external to said data center network (100) an indicator (20),
b) receives a plurality of data packets,
c) determines in dependence of said indicator (20) which number of data packets of said plurality of data packets to transmit via said path, and
d) causes transmission of said number of data packets determined via said path.

9. The method according to claim 8, wherein said switching unit (10), prior to receiving said indicator (20), sends monitoring data (16a, 16b) to the external control unit (14), preferably using the Link Layer Discovery Protocol (LLDP).

10. A switching device (10) for use in a data center network (100) and for controlling the transmission of data packets along one or more respective paths,
**characterized in that** said switching device (10) is configured to
a) receive from a control unit (14) external to said data center network (100) an indicator (20), to
b) receive a plurality of data packets, to
c) determine in dependence of said indicator (20) which number of data packets of said plurality of data packets to transmit via which path, to
d) cause transmission of said number of data packets determined via respective one or more paths.

11. A data center network (100) having a plurality of paths for transmitting data packets, with each path having one or more links, **characterized by** a plurality of switching devices (10) according to claim 10.

12. The data center network according to claim 11, wherein each switching device (10) determines monitoring data and sends same (16a, 16b) to the external control unit (14), preferably using the Link Layer Discovery Protocol (LLDP).

13. A method of controlling the transmission of data packets in a data center network (100) by a plurality of switching devices (10) to which each at least one path for transmission of data packets in said data center network pertains, **characterized in that**
a) an order to transmit a data packet flow from a source in said data center network (100) to a destination in said data center network is received, and wherein each switching device (10) is provided with information about the total number of data packets or the total data rate in said data packet flow,
b) each switching device (10) receives a respective indicator (20) for each respective path, wherein two indicators (20) differ from each other for at least one of the switching devices (10),
c) each switching device (10) determines both in dependence of said indicator (20) which it has received and in dependence of said total number or said total data rate which number of data packets of said plurality of data packets to transmit via which of the one or more paths pertaining thereto and
d) each switching device (10) causes transmission of the number of data packets it has determined.

14. The method of controlling the transmission of data packets according to claim 13, wherein each switching device (10) determines monitoring data and sends same (16a, 16b) to the external control unit (14), preferably using the Link Layer Discovery Protocol (LLDP).
